Europäisches Patentamt

European Patent Office

Office européen des brevets

(19)

(11) Numéro de publication: **0 344 032**
**A1**

## (12) DEMANDE DE BREVET EUROPEEN

(21) Numéro de dépôt: **89401269.9**

(22) Date de dépôt: **03.05.89**

(51) Int. Cl.⁴: **B 01 J 8/08**
**C 10 G 11/18**

(30) Priorité: **24.05.88 FR 8806990**

(43) Date de publication de la demande:
**29.11.89 Bulletin 89/48**

(84) Etats contractants désignés:
**AT BE DE GB GR IT LU NL SE**

(71) Demandeur: **INSTITUT FRANCAIS DU PETROLE**
**4, Avenue de Bois-Préau**
**F-92502 Rueil-Malmaison (FR)**

(72) Inventeur: **Beretta, Alfred**
**Lotissement du Village**
**F-38200 Villette de Vienne (FR)**

**Boute, Bernard**
**29, Domaine de la Côte**
**F-69530 Saint Brignais (FR)**

**Pontier, Renaud**
**Le Village Luzinay**
**F-38200 Vienne (FR)**

(54) **Réacteur à lit fluidisé entrainé comprenant un moyen de régulation du flux de particules solides et son utilisation dans un procédé de craquage catalytique.**

(57) Réacteur (R) à lit fluidisé entrainé, vertical et de forme allongée, comprenant à une première extrémité un organe (1) d'introduction d'un fluide gazeux de fluidisation, un organe (2) d'introduction de particules solides et à l'extrémité opposée un organe d'évacuation des effluents réactionnels, des particules solides et des divers fluides introduits dans le réacteur, et qui comporte un organe de régulation du flux de particules solides, en aval de l'organe d'introduction desdites particules, comprenant une partie fixe (3) et une partie mobile (5) comprenant une tige verticale qui perfore l'une des extrémités du réacteur et une partie (4) solidaire de la tige adaptée à coopérer avec la partie fixe (3) de manière à réguler le flux de particules solides en aval dudit organe de régulation et comprenant au moins un organe (6), d'introduction d'au moins une charge fluide, positionné à proximité dudit organe de régulation du flux de particules solides et en aval dudit organe (2) d'introduction desdites particules solides.

FIG.1

FIG.6

EP 0 344 032 A1

Bundesdruckerei Berlin

Description

# REACTEUR A LIT FLUIDISE ENTRAINE COMPRENANT UN MOYEN DE REGULATION DU FLUX DE PARTICULES SOLIDES ET SES UTILISATIONS

La présente invention concerne un réacteur à lit fluidisé comprenant un moyen de régulation du flux de particules solides et ses utilisations notamment pour la réalisation des procédés de la catalyse hétérogène tels que par exemple le cracking catalytique d'hydrocarbures en lit fluidisé.

La présente invention a également pour objet les procédés chimiques utilisant un réacteur à lit fluidisé entrainé et plus particulièrement un procédé de cracking catalytique en lit fluidisé entrainé (en anglais Carried Fluid Catalytic Cracking ou FCC) utilisant ledit réacteur.

L'invention a également pour objet l'application du réacteur et des procédés mentionnés ci-dessus notamment au craquage catalytique de charges d'hydrocarbures en lit fluidisé entrainé.

On sait que l'industrie chimique utilise de façon usuelle des réacteurs à lit fluidisé entrainé, et en particulier des réacteurs a lit fluidisé entraine habituellement appelés élévateur (en anglais riser) lorsque la charge circule de bas en haut ou descendant (en anglais dropper) lorsque la charge circule de haut en bas, comportant habituellement un moyen de régulation du flux de particules solides arrivant dans le réacteur. Il est bien connu de l'homme du métier en particulier dans le domaine du cracking catalytique en lit fluidisé que ces moyens de régulation, habituellement des vannes, qui doivent travailler en présence de particules solides à haute température et ayant une action abrasive, nécessitent un entretien spécial et doivent être remplacées fréquemment ce qui implique l'arrêt du réacteur. Ce problème est en particulier décrit dans le brevet US-A-4664 139. Ces moyens de régulations du flux de particules catalytiques solides ayant une température très élevée doivent être protégés contre la chaleur et être conçu de manière à éviter un refroidissement localisé des particules solides qui risquerait de provoquer la formation d'une substance ayant l'apparence et les caractéristiques d'un ciment pouvant alors bloquer le fonctionnement desdits moyens. Les matériaux isolants thermiques employés couramment sont habituellement des matériaux fragiles du point de vue mécanique et supportant assez mal les déplacements ce qui est assez peu compatible avec la fonction des moyens de régulation.

La présente invention vise, par conséquent, à proposer un réacteur à lit fluidisé entrainé comprenant un moyen de régulation du flux des particules solides, qui évite les inconvénients précédents, dans lequel lesdits moyens de régulations sont intégrés au corps du réacteur.

De façon plus précise, la présente invention concerne un réacteur a lit fluidisé entrainé sensiblement vertical et de forme allongée comprenant en combinaison :
- a proximité d'une première extrémité, au moins un organe d'introduction d'au moins un fluide de fluidisation circulant depuis ladite première extrémité jusqu'à l'extrémité opposée,
- au moins un organe d'introduction de particules solides, positionné en aval dudit organe d'introduction dudit fluide de fluidisation, et
- au moins un organe d'évacuation des effluents réactionnels, des particules solides et des divers fluides introduits dans ledit réacteur, positionné à proximité de l'extrémité opposée à celle à proximité de laquelle est introduit ledit fluide de fluidisation, et qui comporte :
- au moins un organe de régulation du flux de particules solides, positionné en aval de l'organe d'introduction desdites particules solides, comprenant une partie fixe et une partie mobile, selon un axe sensiblement vertical, coopérant entre elles, ladite partie fixe étant accolée à la paroi intérieure dudit réacteur et ladite partie mobile comprenant une tige, sensiblement verticale, qui perfore ou transperce l'une des extrémités dudit réacteur, ledit organe de régulation assurant la régulation du flux de particules solides en aval de ladite partie fixe dudit organe de régulation, et
- au moins un organe d'introduction, d'au moins une charge fluide, positionné à proximité dudit organe de régulation du flux de particules solides et en aval dudit organe d'introduction desdites particules solides.

L'invention sera mieux comprise, et ses avantages apparaîtront plus clairement, par la description de quelques modes de réalisation, donnés à titre illustratif mais nullement limitatif qui en sera faite ci-après à l'aide des figures annexées.

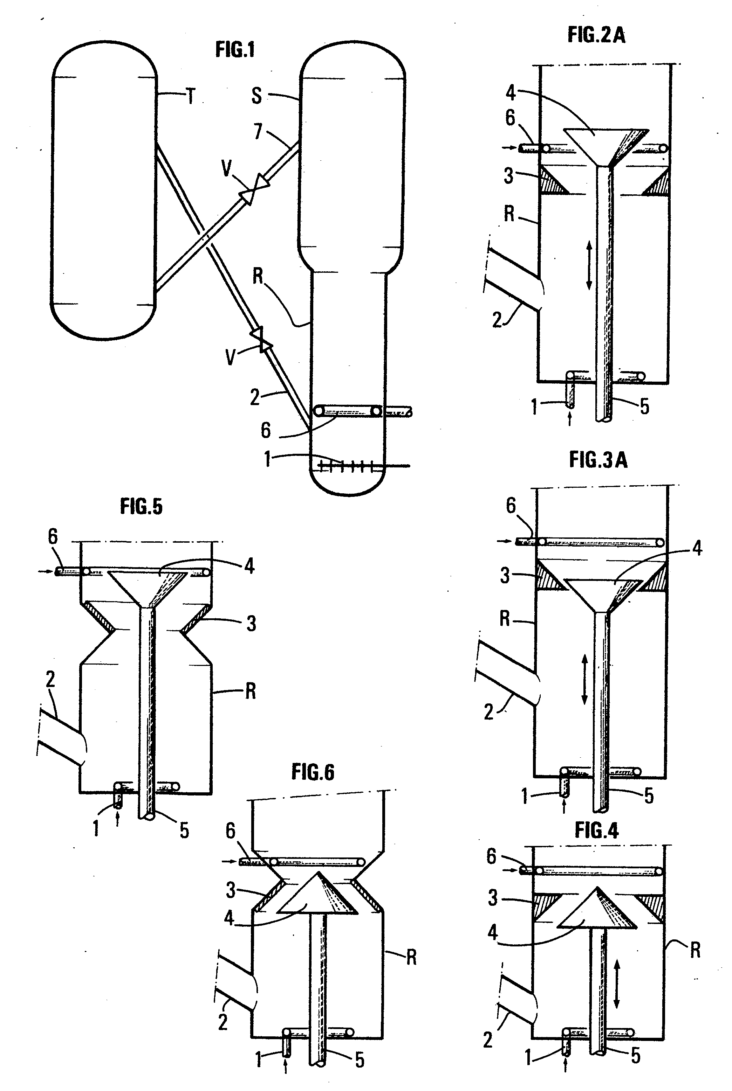

La figure 1 représente schématiquement un dispositif de craquage catalytique en lit fluidisé entrainé classique et d'un type connu en soi. Il comprend essentiellement un réacteur-élévateur (R) ("riser") alimenté à sa base par la ligne (2) en particules solides catalytiques, provenant d'au moins une zone de régénération (T), en quantité déterminée par l'ouverture ou la fermeture d'une vanne (V) un organe (1) d'introduction d'un fluide de fluidisation situé à la base du réacteur, en dessous de la zone d'introduction des particules solides catalytiques, un organe (6) d'introduction de la charge d'hydrocarbures à craquer situé en aval c'est à dire ici au dessus de la zone d'introduction des particules solides. Le réacteur (R) débouche à son sommet dans une enceinte (S) ou organe d'évacuation qui lui est par exemple concentrique et dans laquelle s'effectue la séparation des effluents de la réaction et le strippage des particules solides catalytiques entrainées que l'on envoit par la conduite (7) comportant une vanne (V) de régulation du flux de particules solides catalytiques, dans la zone de régénération (T).

Les zones (S) et (T) sont de types classiques bien connues de l'homme du métier et, de même, les caractéristiques dimensionnelles et opératoires du dispositif de craquage catalytique décrit ci-avant sont bien connues de l'homme du métier et ne seront pas détaillées dans la présente description.

Les figures 2A, 3A, 4, 5, 6 et 7 représentent schématiquement, selon une coupe axiale, la partie inférieure d'un réacteur-élévateur (R) (riser), selon la présente invention, sensiblement vertical cylindrique et de forme allongée, ayant un axe de symétrie vertical, comportant un organe de régulation du flux de particules solides et ne comportant pas de vanne (V) de régulation du flux de particules solides sur la conduite (2) d'introduction desdites particules dans ledit réacteur (R).

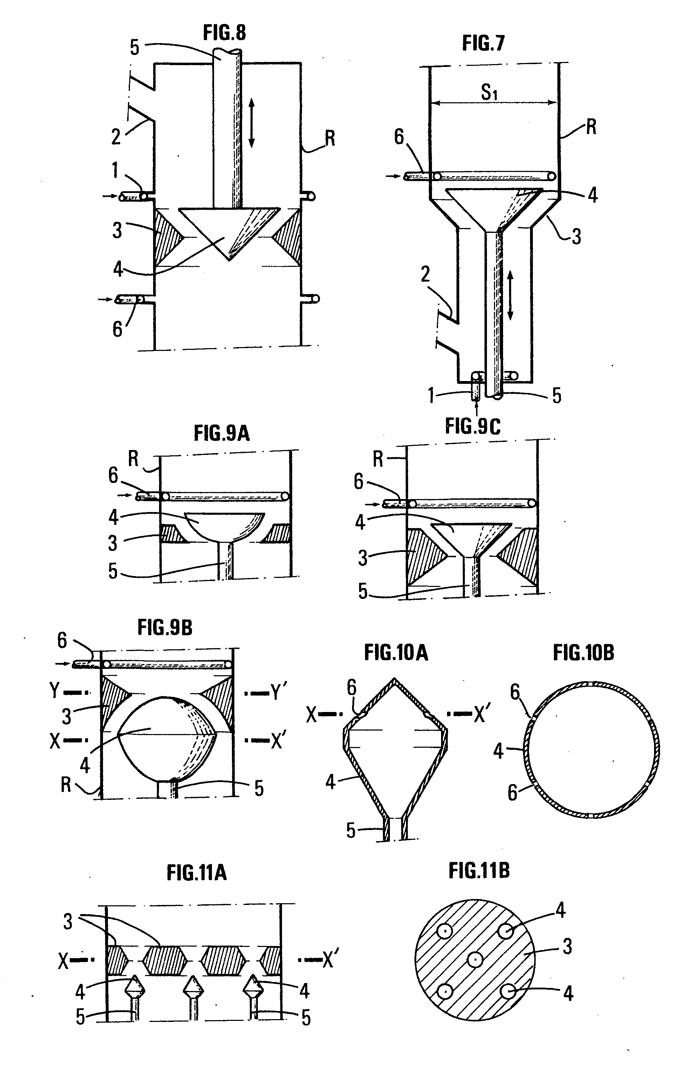

La figure 8 représente schématiquement, selon une coupe axiale, la partie supérieure d'un réacteur descendant (R) (dropper), selon la présente invention, sensiblement vertical cylindrique et de forme allongée, ayant un axe de symétrie vertical, comportant un organe de régulation du flux de particules solides et ne comportant pas de vanne (V) de régulation du flux de particules solides sur la conduite (2) d'introduction desdites particules solides dans ledit réacteur (R).

Les figures 9A, 9B et 9C représentent schématiquement, selon une coupe axiale, diverses formes de l'organe de régulation du flux de particules solides du réacteur (R) selon l'invention.

La figure 10A représente, la partie mobile de l'organe de régulation du flux de particules solides, du réacteur (R) selon l'invention, suivant une coupe axiale dans le cas où cette partie mobile est également utilisée pour l'introduction de la charge d'hydrocarbures dans le réacteur (R) ce qui est une forme préférée de réalisation de la présente invention.

La figure 10B est une coupe suivant l'axe XX′ de la partie mobile représentée sur la figure 10A.

La figure 11A représente schématiquement une coupe axiale d'un réacteur (R), au niveau de la zone de régulation du flux de particules solides, et illustre le cas d'un réacteur (R), selon l'invention, comprenant une pluralité d'organes de régulation (par exemple 5 dont 3 sont visibles sur cette figure). Sur la figure 11A les autres éléments du réacteur (R) n'ont pas été représentés pour des raisons de simplification de la figure.

La figure 11B est une coupe suivant l'axe XX′ des organes de régulation représentés sur la figure 11A.

Sur les différentes figures, les organes similaires sont désignés par les mêmes chiffres ou lettres de référence.

Sur les figures décrivant l'invention les éléments classiques d'un dispositif de craquage catalytique n'ont pas été représentés dans un but de simplification.

Sur la figure 2A on a représenté schématiquement, selon un premier mode de réalisation, la partie inférieure d'un réacteur-élévateur (R) sensiblement vertical, cylindrique et de forme allongée, ayant un axe de symétrie vertical et comportant à son extrémité inférieure :
- un organe (1) d'introduction d'un fluide de fluidisation qui est habituellement un gaz ou un mélange de gaz,
- un organe (2) d'introduction de particules solides, positionné en aval de l'organe (1) d'introduction du fluide de fluidisation, c'est à dire à une certaine distance au dessus de l'organe (1),
- un organe de régulation du flux de particules solides, positionné en aval de l'organe (2) d'introduction des particules solides, c'est à dire à une certaine distance au dessus de l'organe (2), ledit organe de régulation du flux de particules solides comprenant une partie fixe (3) (ou partie femelle) accolée à la paroi du réacteur (R), définissant un rétrécissement de la section circulaire laissée libre dudit réacteur (R), ladite partie fixe ayant la forme d'un solide de révolution, en saillie sur la paroi intérieure du réacteur, ledit solide de révolution étant engendré par la rotation autour de l'axe de la partie inférieure du réacteur (R) d'un triangle rectangle ayant un côté accolé à la paroi intérieure du réacteur (R) et un côté perpendiculaire à ladite paroi, ledit côté perpendiculaire faisant face à l'extrémité inférieure du réacteur (R), et une partie mobile (ou partie mâle) selon un axe sensiblement vertical et confondu avec l'axe de la partie inférieure du réacteur (R), coopérant avec ladite partie fixe (3) et comprenant une tige (5) cylindrique, sensiblement verticale de diamètre inférieur au diamètre de la section circulaire laissée libre au niveau du rétrécissement défini par la partie fixe (3) dans le réacteur (R), ladite tige (5) comportant à son extrémité supérieure une partie évasée (4) en forme de tronc de cône dont l'extrémité supérieure est située, lorque l'organe de régulation est en position ouverte, au dessus du niveau du rétrécissement de la section circulaire laissée libre dans le réacteur (R) ladite extrémité supérieure ayant un diamètre inférieur au diamètre du réacteur (R) mesuré au dessus de la partie fixe (3), et de préférence supérieur au diamètre de la section circulaire laissée libre,
- un organe (6) d'introduction de la charge d'hydrocarbures et éventuellement d'un fluide auxiliaire, servant notamment à l'atomisation de la charge d'hydrocarbures, positionné à proximité de l'organe de régulation du flux de particules solides, en aval de la partie fixe (3) dudit organe de régulation du flux de particules solides, c'est à dire au dessus de ladite partie fixe (3), et
- un organe (S) d'évacuation des effluents réactionnels, des particules solides et des divers fluides introduits dans ledit réacteur (R).

Selon le mode de réalisation schématisé sur la figure 2A la partie mobile de l'organe de régulation du flux de particules solides est en position haute (ouverte) et permet le passage d'une grande quantité de particules solides au niveau de l'organe (6).

La figure 3A schématise le réacteur (R) représenté sur la figure 2A dans le cas ou la partie mobile de l'organe de régulation du flux de particules solides est en position basse et permet le passage d'une faible quantité de particules solides au niveau de l'organe (6).

La figure 4 représente schématiquement un autre mode de réalisation selon l'invention dans lequel l'organe de régulation du flux de particules solides comprend une partie fixe (3) (ou partie femelle) ayant la forme d'un solide de révolution engendré par la rotation autour de l'axe de la partie inférieure du réacteur (R) d'un triangle rectangle ayant un côté accolé à la paroi intérieure du réacteur (R) et un côté perpendiculaire à ladite paroi, ledit côté perpendiculaire faisant face à l'extrémité supérieure du réacteur (R) et une partie mobile (ou partie mâle) selon un axe sensiblement vertical et confondu avec l'axe de la partie inférieure du réacteur (R) coopérant avec ladite partie fixe (3) et comprenant une tige (5) ayant les caractéristiques décrites ci-avant en liaison avec la figure 2A et comportant à son extrémité supérieure une partie évasée (4) en forme de cône dont la pointe est tournée vers le haut et dont la base a un diamètre inférieur au diamètre du réacteur (R) mesuré au dessous de la partie fixe (3) et de préférence supérieur au diamètre de la section circulaire laissée libre dans le réacteur (R). Les autres organes représentés sur la figure 4 sont identiques à ceux représentés sur la figure 2A.

Les figures 5 et 6 représentent schématiquement deux autres modes de réalisation selon l'invention dans lequel la paroi intérieure du réacteur (R) définit une restriction de section et où la partie fixe (3) de l'organe de régulation du flux de particules solides est accolée à l'une des parties inclinées de la paroi du réacteur (R) (partie supérieure sur la figure 5, partie inférieure sur la figure 6). La partie fixe (3), selon le mode de réalisation schématisé sur les figures 5 et 6, est un solide de révolution engendré par la rotation autour de l'axe de la partie respectivement supérieure ou inférieure du réacteur (R) d'un rectangle dont un des côtés est accolé à la paroi du réacteur (R). La partie mobile de l'organe de régulation du flux de particules solides dans le cas des modes de réalisations selon les figures 5 et 6 est identique respectivement à celle décrite ci-avant en liaison avec la figure 2A et avec la figure 4. Selon un autre mode de réalisation similaire à ceux schématisés sur les figures 5 et 6 la partie fixe (3) de l'organe de régulation peut consister simplement en l'une des parties inclinées de la paroi du réacteur. Les autres organes représentés sur les figures 5 et 6 sont identiques à ceux représentés sur la figure 2A.

La figure 7 représente schématiquement un autre mode de réalisation selon l'invention dans lequel la zone du réacteur (R) dans laquelle est introduite les particules solides à une section circulaire de diamètre inférieur au diamètre de la section du réacteur (R) dans la zone d'introduction de la charge d'hydrocarbures. La partie inclinée de la paroi du réacteur (R), reliant la zone dans laquelle est introduite les particules solides à celle dans laquelle est introduite la charge d'hydrocarbures, constitue la partie fixe de l'organe de régulation du flux de particules solides. Les autres organes schématisés sur la figure 7 sont identiques à ceux décrits ci-avant en liaison avec la figure 2A.

La figure 8 représente schématiquement un autre mode de réalisation selon l'invention dans le cas d'un réacteur (R) descendant. Selon le mode de réalisation schématisé sur la figure 8, la partie fixe (3), de l'organe de régulation du flux de particules solides, est un solide de révolution engendré par la rotation autour de l'axe de la partie supérieure du réacteur (R) d'un triangle par exemple isocèle dont un côté est accolé à la paroi intérieure du réacteur (R). Les autres organes schématisés sur la figure 8 sont identiques à ceux décrits en liaison avec la figure 4 à ceci près que l'organe (1) d'introduction du fluide de fluidisation est positionné en aval de l'organe (2) d'introduction des particules solides à proximité de la partie fixe (3) de l'organe de régulation du flux de particules solides et avant celui-ci (en amont de celui-ci).

Les figures 9A, 9B et 9C schématisent trois variantes de forme de l'organe de régulation du flux de particules solides dont la partie fixe (3) est un solide de révolution engendré par la rotation autour de l'axe de la partie inférieure (ou supérieure par exemple dans le cas d'un réacteur (R) descendant) du réacteur (R) d'un polygone curviligne (figures 9A et 9B) ou d'un polygone (figure 9C) dont un côté est accolé à la paroi intérieure du réacteur (R). La partie mobile comporte dans chaque cas une partie évasée (4) dont la forme est adaptée en fonction de, ou résulte de, celle de la partie fixe. Dans la réalisation schématisée sur la figure 9B la partie mobile de l'organe de régulation du flux de particule solide a une partie évasée, de forme ovoïde dont le diamètre maximum se situe au niveau de l'axe XX' et est inférieur au diamètre du réacteur mesuré du côté de l'extrémité perforée par la tige (5) de la partie mobile, et de préférence supérieur au diamètre de la section circulaire laissée libre dans le réacteur (R) au niveau de la partie fixe (3). Sur les figures 9A, 9B et 9C on a également représenté l'organe (6) d'introduction de la charge d'hydrocarbures.

La figure 10A représente schématiquement une coupe axiale de la partie mobile de l'organe de régulation du flux de particules solides dans le cas où cet organe est également utilisé pour l'introduction de la charge d'hydrocarbures. Les diverses formes décrites ci-avant pour l'organe de régulation du flux de particules solides peuvent être envisagées. On a représenté sur cette figure 10A et sur la coupe suivant l'axe XX' (figure 10B) une série de fentes étroites (6) permettant l'introduction de la charge d'hydrocarbures de manière sensiblement perpendiculaire (horizontale) à l'axe de la partie inférieure (ou supérieure) du réacteur (R). On peut également envisager dans le cadre de la présente invention une introduction de la charge d'hydrocarbures par l'intermédiaire de l'organe de régulation du flux de particules solides dans une autre direction par exemple sensiblement à co-courant ou à contre-courant du flux de particules solides et à l'aide d'un dispositif différent par exemple des buses ou des venturis portés par la partie évasée (4) de la partie mobile de l'organe de régulation du flux de particules solides.

La figure 11A représente schématiquement une coupe axiale du réacteur (R) au niveau de la zone de régulation du flux de particules solides, dans le cas ou ce réacteur comprend cinq organes de régulation du flux de particules solides dont trois sont visibles sur cette coupe. Les parties fixes (3) de ces organes sont reliées entre elles et constituent une plaque circulaire accolée à la paroi du réacteur (R) comportant cinq ouvertures tronconiques à la fois vers le bas et vers le haut. La figure 11B montre une coupe suivant l'axe XX' de la figure 11A.

Dans la présente invention l'organe (6) d'introduction de la charge d'hydrocarbures peut être positionné en amont ou en aval de la partie fixe (3) de l'organe de régulation du flux de particules solides. Cet organe (6) est de préférence positionné en aval de la partie fixe (3). Cet organe (6) permet l'introduction de la charge fluide à co-courant, à contre-courant, ou à courant croisé c'est à dire par exemple de manière sensiblement parallèle ou perpendiculaire à la direction du flux de particules solides. On peut également introduire la charge fluide de manière oblique par rapport à la direction du flux de particules solides sensiblement à co-courant ou à contre-courant. Habituellement, si l'on désigne par $D_1$ le diamètre du réacteur (R) mesuré dans la zone où s'effectue la réaction, l'organe (6) est au maximum à une distance de la partie fixe (3) égale à $D_1$ et de préférence égale à $0,5xD_1$.

Selon la présente invention la tige (5) de la partie mobile de l'organe de régulation du flux de particules solides perfore de préférence l'extrémité du réacteur à proximité de laquelle est situé l'organe d'introduction du fluide de fluidisation. Dans une forme avantageuse l'organe d'introduction de la charge d'hydrocarbures est solidarisé avec la partie mobile de l'organe de régulation du flux de particules solides. Ainsi par exemple l'organe de régulation du flux de particules solides comprend une tige (5) creuse terminée à l'une de ces extrémités par une partie évasée (4) adaptée à coopérer avec la partie fixe (3) dudit organe de régulation du flux de particules solides et comportant ledit organe d'introduction de la charge d'hydrocarbures. Cet organe d'introduction de la charge d'hydrocarbures peut être n'importe quel organe bien connu de l'homme du métier permettant l'introduction d'une charge d'hydrocarbures de préférence sous forme de gouttelettes ayant de préférence un diamètre moyen inférieur à $5x10^{-4}$ mètre (m) et avantageusement inférieur à $3x10^{-4}$ m. Il est préférable que la charge d'hydrocarbures soit introduite de manière à former une nappe sensiblement horizontale, de fines gouttelettes réparties de façon homogène au niveau de la zone d'introduction. L'obtention d'une telle nappe de fines gouttelettes est par exemple réalisée en disposant, de façon symétrique, sur la périphérie de la partie évasée (4) de l'organe de régulation du flux de particules solides une pluralité d'organes (6) tels que ceux décrits ci-avant. Un fluide auxiliaire dit d'atomisation favorisant l'obtention de fines gouttelettes peut également être introduit avec la charge d'hydrocarbures. Ce fluide auxiliaire sera habituellement un gaz tel que la vapeur d'eau, ou un gaz relativement riche en hydrogène ou en composés hydrogénés en provenance d'autres unités de la raffinerie.

Au niveau de l'extrémité du réacteur (R) perforée par la tige (5) on dispose habituellement un système de joints assurant l'étanchéité et permettant le déplacement sensiblement vertical de la partie mobile de l'organe de régulation du flux de particules solides. Ces joints sont de types connus de l'homme du métier. Etant donné la configuration du réacteur (R) et du fait de l'introduction d'un fluide de fluidisation à proximité de l'extrémité inférieure du réacteur (R) il n'est habituellement pas nécessaire de prévoir des joints spéciaux. En effet les particules solides habituellement à haute température et ayant une action abrasive n'entre pratiquement pas en contact avec les joints qui peuvent ainsi avoir une durée de vie importante.

Le déplacement de façon sensiblement verticale de la partie mobile de l'organe de régulation du flux de particules solides peut être assuré par tout moyen bien connu de l'homme du métier. Ce déplacement pourra être assuré par un système hydraulique ou tout autre moyen mécanique : crémaillère, glissière, vis sans fin etc...

L'organe de régulation du flux de particules solides est habituellement réalisé à l'aide d'un matériau résistant à l'abrasion et à des températures élevées. Ce matériau pourra être par exemple le même que celui utilisé pour la construction du réacteur (R). La partie fixe (3) et éventuellement la partie mobile de l'organe de régulation du flux de particules solides peuvent par exemple être recouvertes par un matériau réfractaire par exemple du carbure de silicium.

L'organe de régulation du flux de particules solides est habituellement positionné dans le réacteur à une distance suffisante de l'extrémité, à proximité de laquelle sont introduites les particules solides, ladite distance permettant la réalisation d'un lit fluidise dense en dessous dudit organe de régulation. Habituellement la distance entre l'extrémité la plus proche du réacteur (R) et ledit organe de régulation est de 2 à 6 fois le diamètre $D_1$ du réacteur (R) defini ci-avant.

Le diamètre $D_2$ de la section circulaire laissée libre dans le réacteur (R) au niveau du rétrécissement défini par la partie fixe (3) de l'organe de régulation du flux de particules solides est habituellement compris entre environ $0,2xD_1$ et $0,9$ $D_1$ et de préférence entre environ $0,3xD_1$ et $0,7D_1$ bornes incluses. Le diamètre $D_3$ de la tige (5) de la partie mobile de l'organe de régulation du flux de particules solides est habituellement compris entre environ $0,01xD_1$ et $0,5D_1$ et de préférence entre environ $0,02xD_1$ et $0,3D_1$ bornes incluses, la tige (5) ayant dans tous les cas un diamètre largement inférieur au diamètre $D_2$ défini ci-avant.

Le diamètre maximum $D_4$ de la partie évasée (4), de la partie mobile de l'organe de régulation du flux de particules solides, est habituellement compris entre environ $0,15xD_1$ et $0,95$ $D_1$ et de préférence entre environ $0,25xD_1$ et $0,75xD_1$ bornes incluses. Le diamètre $D_4$ peut être légèrement inférieur au diamètre $D_2$ mais on préfère habituellement employer une partie mobile dont le diamètre $D_4$ est supérieur au diamètre $D_2$.

L'organe d'introduction des particules solides est habituellement positionné à proximité de l'extrémité de réacteur en aval de l'organe d'introduction du fluide de fluidisation à une distance de ladite extrémité égale à environ 0,2 à 1 fois le diamètre $D_1$ du réacteur (R) tel que défini ci-avant.

L'organe d'introduction du fluide de fluidisation est habituellement positionné à l'une des extrémités du réacteur (R). Cet organe est un organe classique bien connu de l'homme du métier tel que par exemple un diffuseur. Le fluide de fluidisation est habituellement un fluide gazeux. Ce fluide peut avantageusement comprendre des hydrocarbures ayant de un à cinq atomes de carbone dans leur molécule. Il peut en outre contenir éventuellement jusqu'à environ 25 % en volume d'hydrogène et jusqu'à environ 20 % en volume de vapeur d'eau.

Les conditions d'injection de ce fluide gazeux varient bien entendu en fonction de la taille, du poids des particules solides utilisées et des dimensions de la zone du réacteur (R) située avant (en amont de) l'organe de régulation du flux de particules solides. Ces conditions sont choisies de manière à former un lit fluidisé dense homogène dans la zone du réacteur (R) située avant (en amont de) l'organe de régulation du flux de particules solides et à former un lit fluidisé dilué dans la zone du réacteur (R) située après (en aval de) l'organe de régulation du flux de particules solides, lesdites conditions et ledit flux de particules solides étant habituellement ajustés de manière à obtenir un lit fluidisé dilué ayant une densité comprise entre 10 et 700 kg/m³.

Il est habituellement préférable de concevoir le réacteur (R) de manière à ce que les particules solides soient recentrées au niveau de l'organe de régulation du flux de particules solides. Ainsi on préférera un mode de réalisation tel que par exemple celui schématisé sur les figures 4, 6, 8, 9B et 11A.

Bien qu'habituellement cela ne soit pas nécessaire il est également possible dans le cadre de la présente invention de prévoir l'introduction d'un fluide auxiliaire gazeux en aval de l'organe d'introduction des particules solides et de préférence an amont de l'organe de régulation du flux de particules solides. Ce fluide auxiliaire gazeux est alors introduit dans le lit fluidisé dense de particules solides. Ce fluide auxiliaire gazeux peut être de composition sensiblement identique à celle du fluide de fluidisation ou à celle du fluide d'atomisation ou de composition différente.

Le réacteur (R) est habituellement, comme décrit ci-avant, un tube cylindrique dont le diamètre est sensiblement constant sur toute sa hauteur. On peut également envisager sans sortir du cadre de la présente invention un réacteur (R) dont la zone d'introduction des particules solides à un diamètre inférieur à celui de la zone dans laquelle est introduite la charge d'hydrocarbures (cas de la figure 7A) ou au contraire dont la zone d'introduction des particules solides a un diamètre supérieur à celui de la zone dans laquelle est introduite la charge d'hydrocarbures (cas non schématisé). On utilise de préférence un réacteur (R) cylindrique de diamètre sensiblement constant sur toute sa hauteur.

Les modes de réalisation de la présente invention décrits ci-avant concernent un réacteur (R) sensiblement vertical, de forme allongée et cylindrique donc de section circulaire. D'autres modes de réalisation peuvent être facilement envisagés par l'homme du métier sans sortir du cadre de la présente invention, par exemple le réacteur (R) sensiblement vertical et de forme allongée peut avoir une section polygonale telle que par exemple carrée ou hexagonale.

La présente invention a également pour objet un procédé FCC utilisant ce réacteur (R) dans lequel on introduit à proximité d'une première extrémité du réacteur un fluide de fluidisation de préférence gazeux que l'on fait circuler depuis ladite extrémité jusqu'à l'extrémité opposée, on introduit en aval de la zone d'introduction du fluide de fluidisation des particules solides chaudes au moins en partie catalytiques et on évacue les effluents réactionnels, les particules solides et les divers fluides à proximité de l'extrémité de la zone réactionnelle proprement dite, cette extrémité étant l'extrémité du réacteur (R) opposée à celle à proximité de laquelle on a introduit dedit fluide de fluidisation, caractérisé en ce que on régule le flux de particules solides en aval de la zone d'introduction desdites particules solides de manière à former en aval de ladite zone de régulation du flux de particules solides une phase fluidisée diluée et entrainée desdites particules solides et on introduit la charge d'hydrocarbures à craquer à proximité de ladite zone de régulation du flux de particules solides et en aval de la zone d'introduction desdites particules solides, sous forme de fines gouttelettes de diamètre moyen inférieur à $5 \times 10^{-4}$ m.

Dans une forme préférée du procédé de cracking catalytique en lit fluidisé entrainé la charge d'hydrocarbures est introduite en aval du plan sensiblement horizontal passant par les sommets des polygones ou polygones curvilignes de la partie fixe de l'organe de régulation, lesdits sommets étant les sommets opposés aux côtés des polygones accolés à la paroi intérieure du réacteur (R). Il s'agit du plan schématisé sur la figure 9B par l'axe YY' c'est-à-dire du plan de la section circulaire laissée libre dans le réacteur (R) au niveau du rétrécissement défini par la partie fixe (3) de l'organe de régulation du flux de particules solides.

Dans les procédés FCC la charge d'hydrocarbures est vaporisée par mise en contact à haute température avec un catalyseur de craquage qui est maintenu en suspension dans les vapeurs de la charge. Après que l'on ait atteint par craquage la gamme de poids moléculaire désirée, avec un abaissement correspondant des points d'ébullition, le catalyseur est séparé des produits obtenus, strippé régénéré par combustion du coke formé, puis remis en contact avec la charge à craquer.

Dans les procédés de ce type, la réduction souhaitée des points d'ébullition résulte de réactions catalytiques et thermiques contrô lées : le procédé FCC est naturellement mis en oeuvre de façon à ce que l'unité de craquage soit en équilibre thermique. Autrement dit, l'alimentation en catalyseur chaud régénéré doit être telle qu'elle puisse répondre aux diverses exigences thermiques de la section réactionnelle, à savoir, en particulier :
- le préchauffage de la charge liquide ;

- la vaporisation de cette charge ;
- l'apport de calories exigé par les réactions impliquées, lesquelles, globalement, sont endothermiques.

Le procédé de la présente invention permet une régulation facile de la quantité de catalyseur entrant en contact avec la charge d'hydrocarbures. On peut ainsi ajuster très rapidement la quantité de catalyseur entrant dans la zone réactionnelle proprement dite en fonction de la quantité de charge d'hydrocarbures injectée et éviter largement tout déséquilibre entre la quantité de chaleur nécessaire à la vaporisation de la charge d'hydrocarbures et la quantité de chaleur apportée par le catalyseur.

De plus, le procédé de la présente invention permet une vaporisation très rapide de la charge d'hydrocarbures et une atomisation pratiquement complète et rapide de tout produit non vaporisé à proximité de la zone d'injection de la charge d'hydrocarbures, on diminue ainsi fortement la production de coke et/ou la formation excessive de gaz dus à un déséquilibre entre la quantité de chaleur fournie par le catalyseur et celle nécessaire aux réactions de craquage.

Le procédé de la présente invention permet en particulier une très bonne maîtrise du rapport réel "C/O" entre la quantité de catalyseur C injectée dans la zone réactionnelle proprement dite et celle O de la charge à traiter, ce qui permet d'obtenir un taux de conversion élevé et une essence ayant un excellent indice d'octane.

Dans le procédé de la présente invention la quantité de coke formé, lors de la mise en contact de la charge et du catalyseur, est largement réduite ce qui facilite la régénération de ce catalyseur en réduisant le temps de séjour dans le ou les régénérateurs et en y diminuant les possibilités d'apparition de points chauds, qui sont à la fois nuisibles pour le catalyseur et pour l'unité. L'unité peut ainsi fonctionner sans ajout de catalyseur frais (neuf), c'est-à-dire de catalyseur n'ayant pas été mis en contact avec la charge, pendant plus longtemps.

Les catalyseurs utilisables dans le procédé de la présente invention sont de types bien connus par l'homme du métier. On peut citer à titre d'exemples les alumino-silicates cristallins naturels ou synthétiques telles que faujasites, mordénites, montmorillonites, certains types de silice-alumine, silice-magnésie, les argiles pontées et les alumino-phosphates.

Les caractéristiques dimentionnelles et opératoires du dispositif utilisé dans le procédé de la présente invention sont habituellement les suivantes
- hauteur du réacteur (R) 5 à 40 mètres
- température de la charge à craquer 70 à 500 °C
- débit d'alimentation en charge à traiter 1000 à 10000 tonnes par jour
- débit d'alimentation en particules solides catalytiques 100 à 3000 tonnes par heure.
- temps de séjour de la charge dans le réacteur (R) 0,05 à 10 secondes
- diamètre du réacteur (R) 0,5 à 5 mètres

Les charges à traiter contiennent, d'une façon générale, des hydrocarbures ayant des gammes d'ébullition se situant entre environ 200 °C et 750 °C et leur densité peut varier entre envirion 10 ° et 35 ° API.

L'exemple décrit ci-après vise à illustrer la présente invention et n'a donc par conséquent aucun caractère limitatif.

Exemple

Deux essais de craquage catalytique ont été réalisés à partir d'une même charge d'hydrocarbures dans une unité de craquage catalytique en lit fluidisé entraîné. Le premier essai, non conforme à la présente invention, a été effectué dans une unité de type classique telle que celle schématisée sur la figure 1 (riser) et le deuxième essai (suivant l'invention) dans une unité similaire (riser) à celle de la figure 1 comportant en outre un organe de régulation du flux de particules solides catalytiques à proximité de l'extrémité inférieure du réacteur (R) et ne comportant toutefois pas de vanne V de régulation du flux de particules solides catalytiques sur la ligne (2) d'alimentation du réacteur (R) en particules solides catalytiques. Le réacteur (R) utilisé est dans les deux cas une maquette expérimentale de 0,3 mètre de diamètre et de 18 mètres de hauteur.

Le flux de fluidisation gazeux est introduit à la base du réacteur. Les particules solides catalytiques sont introduites à 0,3 m au-dessus de la base du réacteur. La charge est introduite sous forme de fines gouttelettes de moins de $2 \times 10^{-4}$ m de diamètre, de manière sensiblement perpendiculaire à la direction du flux de particules solides catalytiques à 1,2 mètre au-dessus de la base du réacteur.

Dans le deuxième essai l'organe de régulation du flux de particules solides avait la forme décrite en liaison avec la figure 9B, et le rétrécissement défini par la partie fixe de cet organe était situé à 1,2 m au-dessus de la base du réacteur. Le diamètre de la section laissée libre dans le réacteur au niveau du rétrécissement était de 0,20 m.

L'organe de régulation a été utilisé pour l'introduction de la charge, sa partie évasée comportait à proximité de son extrémité supérieure une série de fentes selon la figure 10B, disposées symétriquement sur sa périphérie, permettant l'injection de la charge sous forme ce fines gouttelettes de moins de $2 \times 10^{-4}$ m de diamètre de manière sensiblement perpendiculaire à l'axe du réacteur. La tige perforant la base du réacteur et supportant la partie évasée était une tige creuse de 0,05 m de diamètre. Le diamètre maximum de la partie évasée était de 0,205 m. L'organe de régulation était monté de manière à ce que lorsque la partie mobile est poussée vers le haut la quantité de catalyseur passant au-dessus de la partie fixe de l'organe de régulation diminue.

Dans les deux essais les conditions opératoires étaient les suivantes :

- charge : résidu atmosphérique Safaniyah

| | | |
|---|---|---|
| - température d'injection catalyseur | : | 675 °C |
| - température de la zone réactionnelle | : | 525 °C |
| - température d'injection de la charge | : | 242 °C |
| - débit de catalyseur | : | 60 kg/h |

Les résultats, après 250 heures de fonctionnement, rassemblés ci-après montrent que le réacteur (R) suivant l'invention permet d'obtenir une meilleure sélectivité en essence et une appréciable réduction de coke avec, par conséquent, une meilleure stabilité du catalyseur et une diminution en appoint de catalyseur frais.

| | 1er essai comparatif % poids | 2ème essai suivant l'invention % poids |
|---|---|---|
| Gaz | 21,2 | 16,7 |
| essence C$_5$-215°C | 35,0 | 43,3 |
| coupe (LCO) 215-360°C | 21,2 | 22,8 |
| "slurry" coupe 360$^+$°C | 11,2 | 9,9 |
| coke | 9,6 | 7,4 |

## Revendications

1. Réacteur à lit fluidisé entrainé, sensiblement vertical et de forme allongée comprenant en combinaison :- a proximité d'une première extrémité, au moins un organe (1) d'introduction d'au moins un fluide de fluidisation circulant depuis ladite première extrémité jusqu'à l'extrémité opposée,
- au moins un organe (2) d'introduction de particules solides positionné en aval dudit organe d'introduction (1) dudit fluide de fluidisation, et
- au moins un organe d'évacuation des effluents réactionnels, des particules solides et des divers fluides introduits dans ledit réacteur, positionné à proximité de l'extrémité opposée à celle à proximité de laquelle est introduit ledit fluide de fluidisation caractérisé en ce qu'il comporte :
- au moins un organe de régulation du flux de particules solides, positionné en aval de l'organe (2) d'introduction desdites particules solides, comprenant une partie fixe (3) et une partie mobile, selon un axe sensiblement vertical, coopérant entre elles, ladite partie fixe étant accolée à la paroi intérieure dudit réacteur et ladite partie mobile comprenant une tige (5) sensiblement verticale qui perfore l'une des extrémités dudit réacteur, ledit organe de régulation assurant la régulation du flux de particules solides en aval de ladite partie fixe (3) dudit organe de régulation, et
- au moins un organe (6) d'introduction, d'au moins une charge fluide, positionné à proximité dudit organe de régulation du flux de particules solides et en aval dudit organe d'introduction desdites particules solides.

2. Réacteur selon la revendication 1 dans lequel l'organe (6) d'introduction de la charge fluide est positionné en aval de la partie fixe (3) de l'organe de régulation du flux de particules solides.

3. Réacteur selon la revendication 1 dans lequel l'organe (6) d'introduction de la charge fluide est positionné en amont de la partie fixe (3) de l'organe de régulation du flux de particules solides.

4. Réacteur selon l'une des revendications 1 à 3 dans lequel la tige (5) de la partie mobile de l'organe de régulation du flux de particules solides perfore l'extrémité du réacteur à proximité de laquelle est situé l'organe (1) d'introduction du fluide de fluidisation.

5. Réacteur selon l'une des revendications 1 à 4 dans lequel l'organe (1) d'introduction de la charge fluide est solidarisé avec la partie mobile de l'organe de régulation du flux de particules solides.

6. Réacteur selon l'une des revendications 1 à 5 dans lequel la partie mobile de l'organe de régulation du flux de particules solides comprend une tige (5) creuse terminée, à l'une de ses extrémités, par une partie évasée (4) adaptée à coopérer avec la partie fixe (3) dudit organe de régulation du flux de particules solides ladite partie fixe ayant la forme d'un polygone ou d'un polygone curviligne accolé par un de ces côtés à la paroi intérieure du réacteur et ladite partie mobile comportant ledit organe (6) d'introduction de ladite charge fluide.

7. Réacteur selon l'une des revendications 1 à 6 dans lequel ledit organe (6) d'introduction de ladite charge fluide est un organe assurant l'introduction de ladite charge fluide dans ledit réacteur de manière sensiblement horizontale.

8. Réacteur selon l'une des revendications 1 à 7 dans lequel ledit organe d'introduction (6) de ladite charge fluide dans ledit réacteur assure l'introduction de ladite charge fluide sous forme de gouttelettes ayant un diamètre moyen inférieur $5 \times 10^{-4}$ mètre.

9. Utilisation du réacteur selon l'une des revendications 1 à 8 au craquage catalytique, en lit fluidisé entrainé, de charges d'hydrocarbures.

10. Procédé de craquage catalytique d'hydrocarbures en lit fluidisé entrainé dans un réacteur selon l'une des revendications 1 à 8 dans lequel on introduit à proximité d'une première extrémité un fluide de fluidisation que l'on fait circuler depuis ladite extrémité jusqu'à l'extrémité opposée, on introduit en aval de la zone d'introduction du fluide de fluidisation des particules solides au moins en partie catalytiques et on évacue les effluents réactionnels, les particules solides et les divers fluides à proximité de l'extrémité opposée à celle à proximité de laquelle on a introduit ledit fluide de fluidisation, caractérisé en ce que on régule le flux de particules solides en aval de la zone d'introduction desdites particules solides de manière à former en aval de ladite zone de régulation du flux de particules solides une phase fluidisée diluée et entraînée desdites particules solides et on introduit la charge d'hydrocarbures à craquer, à proximité de ladite zone de régulation du flux de particules solides, et en aval de la zone d'introduction desdites particules solides, sous forme de fines gouttelettes de diamètre moyen inférieur à $5 \times 10^{-4}$ mètre.

11. Procédé selon la revendication 10 dans lequel la charge d'hydrocarbures à craquer est introduite en aval du plan sensiblement horizontal passant par les sommets des polygones ou polygones curvilignes de la partie fixe de l'organe de régulation, lesdits sommets étant les sommets opposés aux côtés des polygones accolés à la paroi du réacteur.

FIG.1

FIG.2A

FIG.5

FIG.3A

FIG.6

FIG.4

FIG.8

FIG.7

FIG.9A

FIG.9C

FIG.9B

FIG.10A

FIG.10B

FIG.11A

FIG.11B

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 624 836 (R.C. CARTMELL et al.) <br> * Résumé; figures 1,2; colonne 4, ligne 28 - colonne 5, ligne 45 * <br> --- | 1,3,5,9 | B 01 J 8/08 <br> C 10 G 11/18 |
| A | GB-A-2 195 323 (SHELL INTERNATIONALE RESEARCH MAATSCHAPPIJ) <br> * Résumé; figure 1; page 1, lignes 57-110 * <br> --- | 1 | |
| A | GB-A-1 569 813 (OUTOKUMPU) <br> * Page 1, lignes 9-12; page 3, lignes 51-107; figures 2A,2B * <br> ----- | 1,5 | |

**DOMAINES TECHNIQUES RECHERCHES (Int. Cl.4)**

B 01 J
B 65 D
B 65 G
C 10 G

Le présent rapport a été établi pour toutes les revendications

| Lieu de la recherche | Date d'achèvement de la recherche | Examinateur |
|---|---|---|
| LA HAYE | 30-08-1989 | SIEM T.D. |

CATEGORIE DES DOCUMENTS CITES

X : particulièrement pertinent à lui seul
Y : particulièrement pertinent en combinaison avec un
 autre document de la même catégorie
A : arrière-plan technologique
O : divulgation non-écrite
P : document intercalaire

T : théorie ou principe à la base de l'invention
E : document de brevet antérieur, mais publié à la
 date de dépôt ou après cette date
D : cité dans la demande
L : cité pour d'autres raisons

 

& : membre de la même famille, document correspondant

EPO FORM 1503 03.82 (P0402)